# EUROPEAN PATENT APPLICATION

(11) **EP 3 213 994 A1**
(43) Date of publication of application: **06.09.2017**
(21) Application number: 17159067.2
(22) Date of filing: 03.03.2017
(51) Int. Cl.: B64D 11/06, B60N 3/00

(54) **A MULTI LEAF TRAY TABLE**

(30) Priority: 03.03.2016 US 201662302997 P
(71) Applicant: Zodiac Seats UK Limited, Cwmbran NP44 3HQ (GB)
(72) Inventor: GOW, Robert, Cwmbran, NP44 3HQ (GB)
(74) Representative: Abel & Imray

(57) **Abstract**

Embodiments of the present disclosure relate generally to a tray table arrangement having multiple leaves. The leaves are vertically stacked when stowed. Upon deployment, an upper leaf moves primarily horizontally and then lowered/seated vertically with respect to a lower leaf to present the full table to the user. The sequence is reversed for stowage.

## Description

### CROSS REFERENCE TO RELATED APPLICATIONS

This application claims the benefit of U.S. Provisional Application Serial No. 62/302,997, filed March 3, 2016, titled "Multi Leaf Tray Table," the entire contents of which are hereby incorporated by reference.

### FIELD OF THE DISCLOSURE

Embodiments of the present disclosure relate generally to a tray table arrangement having multiple leaves. The leaves are vertically stacked when stowed. Upon deployment, an upper leaf moves primarily horizontally and is then lowered/seated vertically with respect to a lower leaf to present a full table to the user. The sequence is reversed for stowage.

### BACKGROUND

Tray tables are commonly used on passenger transportation vehicles in order to provide a surface for passengers. The tables may be used for meals, drinks, reading, for supporting electronics, or for any other purpose. Aircraft and other vehicles that offer tray tables often provide the tray tables on seat back assemblies. This can provide a convenient table for a person sitting in a position behind the seat, facing the rear of the seat. Passengers use a tray table mounted on a seat back of an immediately forward seat. In other examples, tray tables may be provided on an aircraft monument or privacy shell. These configurations are generally used for business class or first-class seats, where a monument forward of the passenger seat may provide a viewing screen, storage space or other features. Other passenger seats may provide tray tables positioned alongside the passenger or extending from an armrest. Tray tables may also be offered in seating arrangements that offer bed positions, such that a passenger has a resting place for beverages, eyeglasses, and other small items.

Tray tables are often pivoted on a pair of arms which allow the tray table to swivel between deployed and stowed positions. In use, a latch is released which allows the table to pivot down toward the passenger, forming a flat surface for use. For stowage, the table is pivoted back up and forward, away from the passenger, and locked. This movement causes the table to move to an upright position, along an arc. When stowed, the tray table is aligned with the seat back or other surface for latching.

The tray table generally extends into the passenger's usable space. When the tray table is deployed, it is often the case that only a few inches remain between the passenger and the table edge. Some tray tables are designed to slide in and out on a rail while deployed, which can give the passenger a few extra inches of seat space room if needed. However, even in these space-allowing options, if a passenger needs to exit the seat, s/he must remove everything from the top surface of the tray. Additionally, when it becomes time for the tray table to be stowed, there is no intermediate option. The passenger must remove everything from the tray in order for the tray to be pivoted upward.

Similar situations may occur with foot stools, counters, or other aircraft/space-saving spaces. For example, in some passenger seating arrangements, there is provided a footstool positioned generally forward of the passenger seat. The footstool may be deployed for resting of the passenger's ankles or calves. It may pivot up and down from a forward surface in an arc. Foot stools generally do not provide multiple positions and are thus limiting. Countertop surfaces are similarly not adjustable. Accordingly, improvements to these systems are thus desirable.

### BRIEF DESCRIPTION OF THE DRAWINGS

FIG. 1 shows a side perspective view of a support surface in a closed configuration.
FIG. 2 shows a side perspective view of the support surface of FIG. 1 in an extended configuration.
FIGS. 3A-3C illustrate side cross-sectional views of two tray leaves and their cooperation with one another. FIG. 3A illustrates the leaves vertically stacked. FIG. 3B illustrates the leaves in a horizontal sliding motion. FIG. 3C illustrates the leaves once they are horizontally aligned for use.
FIG. 4 illustrates a top cross-sectional view of the slide carriages and linkage assembly of the leaves of FIGS. 3A-3C.
FIG. 5A illustrates a bottom perspective view of one embodiment of an upper leaf. FIG. 5B illustrates the upper leaf of FIG. 5A with a slide carriage in cooperation with a track that guides horizontal sliding movement with respect to a lower leaf.
FIG. 6A illustrates a top perspective view of a lower leaf assembly without the upper leaf installed. FIG. 6B illustrates the lower leaf assembly of FIG. 6A with a track positioned.
FIG. 7 illustrates a top perspective view of the upper leaf installed and sliding with respect to the lower leaf along a track.
FIG. 8 illustrates a side perspective view of a tray table in its extended position.

### DETAILED DESCRIPTION

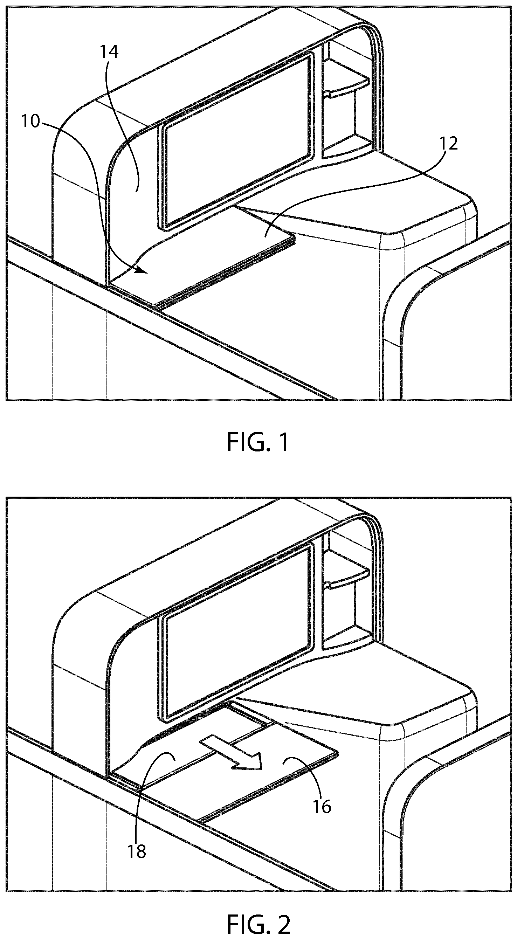

Embodiments of the present invention provide a multi leaf support surface that uses horizontal movement of two leaves with respect to one another. FIG. 1 illustrates a support surface 10 in a first configuration. This figure illustrates the support surface 10 as being a passenger tray table 12. The tray table 12 extends from a surface 14. In the figures shown, the surface 14 is forward of the passenger, but it should be understood that a side or rear surface is also possible and considered within the scope of this disclosure.

Tray tables find particular use onboard passenger aircraft or other passenger vehicles. They offer a resting surface for passenger meals, beverages, papers, work, reading materials, or any other items. There may be times when a passenger desires to have a smaller tray table option, but still be afforded a resting place. In such instances, the first position of FIG. 1 provides such an option.

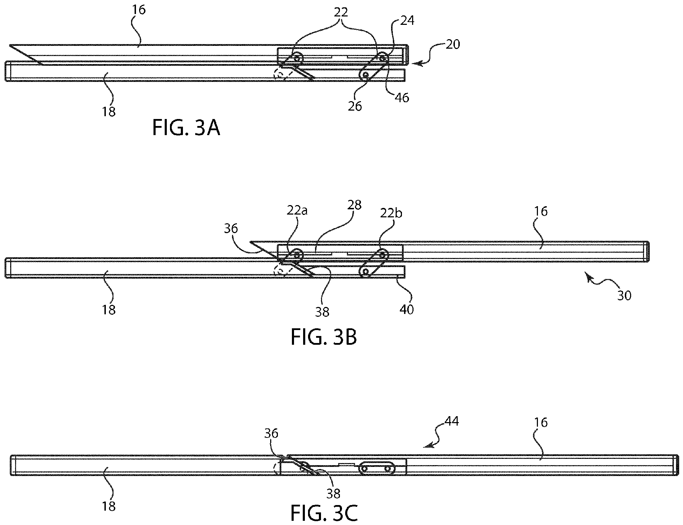

In other instances, however, a passenger may desire to have a larger work surface/tray table option. In such instances, the tray table 12 may be extended to a second position, illustrated by FIG. 2. One way in which this table extension may take place is illustrated by FIGS. 3A-3C. In FIG. 3A, an upper leaf 16 is stacked on a lower leaf 18. In this example, the leaves 16, 18 are oriented vertically to one another. FIG. 3A also illustrates a linkage assembly 20 that secure the leaves 16, 18 to one another, while allowing their cooperation with respect to one another.

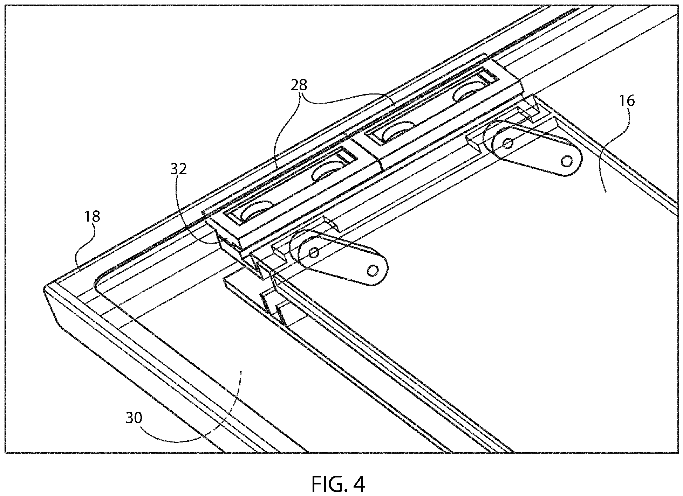

In one example, the linkage assembly 20 comprises four connection members 22 that function as linkages. In a specific embodiment, the linkage assembly comprises a four bar linkage. The connection members 22 may be positioned at side edges of the leaves 16, 18, as illustrated by FIG. 4. For example, one set of connection members may be positioned forward and one set of connection members positioned more rearward. Because FIGS. 3A-3C are side views, they illustrate only a single forward connection member 22a and single rearward connection member 22b. However, it should be understood that corresponding connection members are located on the opposite edge of each of the leaves. Each connection member has a first end 24 secured to the upper leaf 16 and a second and 26 secured to the lower leaf 18. The ends 24, 26 are hingedly connected to each leaf 16, 18 respectively at pivots 46.

As shown in FIG. 4, the upper leaf 16 is illustrated with one or more slide carriages 28 associated with its lower surface 30. (In an alternate embodiment, the one or more slide carriages may be associated with the upper surface of the lower leaf.) When the upper leaf 16 is moved horizontally backwards with respect to the lower leaf 18, as illustrated by FIG. 3B, the one or more slide carriages 28 allow the upper leaf 16 to slide in a linear motion across the top of the lower leaf 18. In one example, the slide carriage may have a tab portion 32 that rides in a groove portion of the corresponding leaf. FIG. 4 illustrates a side perspective, transparent view of the leaves 16, 18. The initial and subsequent movement of the upper leaf 16 may be done without removing a drink, newspaper, eyeglasses, or other items from the top of upper leaf 16. This horizontal movement prevents the traditional arc that is created when opening and closing a tray table. If there is a protruding screen or other item above the table support surface, this horizontal movement allows deployment of the table without interfering with anything above.

Referring back to FIGS. 3A-3C, lower leaf 18 is also illustrated as having an extended support 40. Extended support 40 can provide a resting surface for the upper leaf 16 when the upper leaf 16 is in the fully extended position, as illustrated by FIG. 3C. In one example, the upper leaf 16 may have a recessed portion configured to receive the extended support 40 when in the fully extended position. Extended support 40 can help provide a connection portion for the connection members 22, as well as provide additional support and stability for the upper leaf 16 when extended.

The series of FIGS. 3A-3C also illustrates that at least the upper leaf 16 has an angled cooperating face 36. It is also possible for the lower leaf 18 to have a corresponding angled cooperating face 38. When the upper leaf 16 is fully extended, the connection members 22 of the linkage assembly 20 rotate or pivot to cause horizontal alignment of the leaves 16, 18. As illustrated by FIG. 3C, the faces 36, 38 are also aligned. This can help provide a stable and consistent table surface 44.

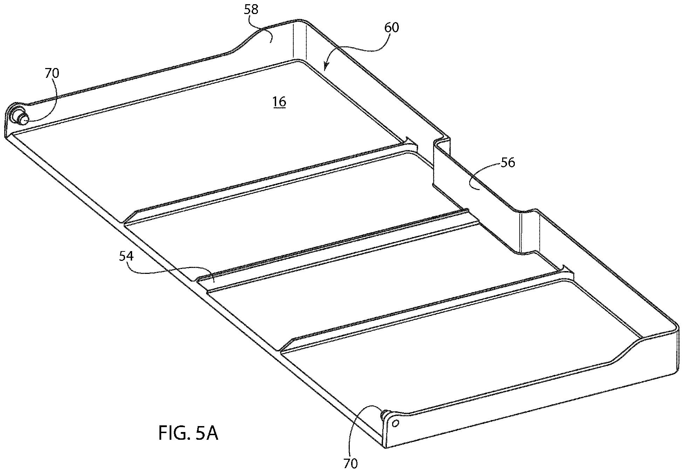

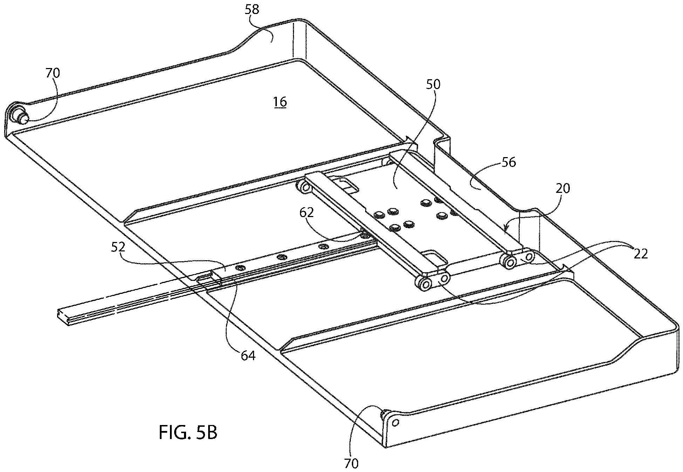

FIGS. 5-8 illustrate alternate examples of a cooperation between upper and lower leaves. Rather than having slide carriages along side edges, this embodiment provides a central slide carriage 50 and a central track 52. FIG. 5A illustrates a bottom perspective view of an upper leaf 16. This view shows a groove portion 54 positioned along a central portion of the leaf 16. As illustrated and as described further below, the groove portion 54 is configured to cooperate and slide along a central track 52. FIG. 5A also illustrates a finger grip portion 56 which allows a user to easily grasp and move the upper leaf 16. The upper leaf 16 further has a tray body flange 58 extending around the perimeter of the leaf 16. Tray body flange 58 helps define a hollow shell 60 which is received over and cooperates with the lower leaf 18, as described below. FIG. 5B illustrates the upper leaf 16 having a slide carriage 50 and central track 52 installed thereon. The slide carriage 50 features the linkage assembly 20, which includes four bar linkage connection members 22. The slide carriage 50 is provided with a track receiving groove 62. In the example shown, the central track 52 is provided with a track ledge 64 that is received by and cooperates with the track receiving groove 62. This cooperation may be a T-shaped cooperation, a dovetail-shaped cooperation, or any other appropriate keyed connection that allows sliding movement of the upper leaf 16.

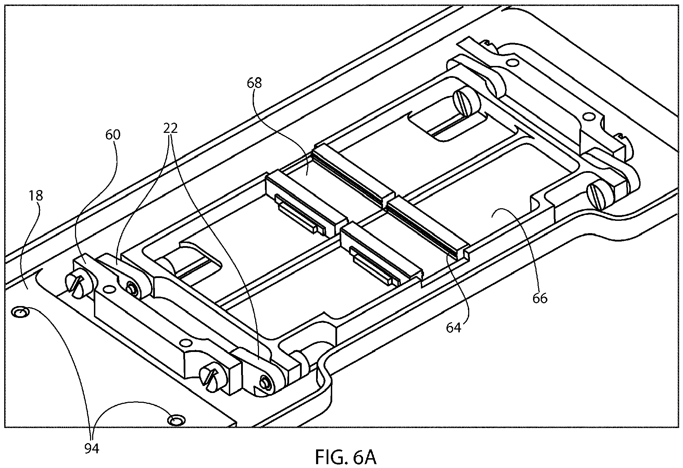

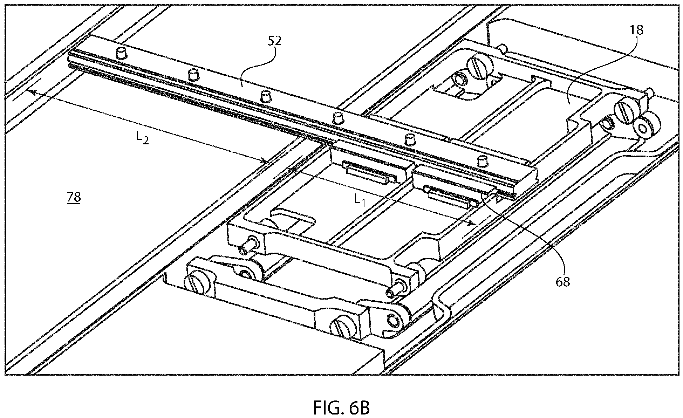

FIG. 6A illustrates a top perspective view of the lower leaf 18 without the upper leaf 16 attached, with an attachment bracket 66 in place. One end of each connection member 22 is secured to the slide carriage 50 of FIG. 5B, and an opposite end of each connection member 22 is secured to the attachment bracket 66 of FIG. 6A. The attachment bracket 66 has track blocks 68. Track blocks 68 are illustrated as having an internal "T" shape, which is configured to receive the central track 52. This is illustrated by FIG. 6B. FIG. 6B shows a top perspective view of the lower leaf 18 before the upper leaf 16 has been positioned, but with the central track 52 secured in place. As illustrated, one length portion (L1) of the central track 52 is received by the track blocks 68. Another length portion (L2) of the central track 52 is secured to the portion 78 of the lower leaf 18 that is positioned furthest from the passenger in use.

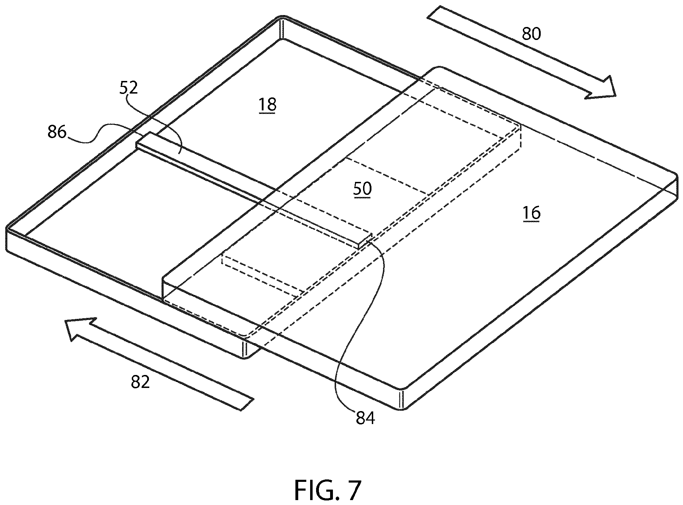

FIG. 7 illustrates a schematic view of the upper leaf 16 moving horizontally with respect to the lower leaf 18 along the central track 52. When the upper leaf 16 is to be stowed, the slide carriage 50 slides rearwardly, in the direction of arrow 82. When the upper leaf 16 is to be deployed, the slide carriage 50 slides forward toward a passenger, in the direction of arrow 80. When the table is in the deployed configuration, the slide carriage 50 may extend to the end 84 of track 52. When the table is in the stowed configuration, the slide carriage 50 moves to the opposite end 86 of the track 52. It should be understood that instead of a single central track 52, it is possible to provide more than one track positioned at various points along the leaves. For example, two tracks may be positioned alongside each of the leaves 16, 18.

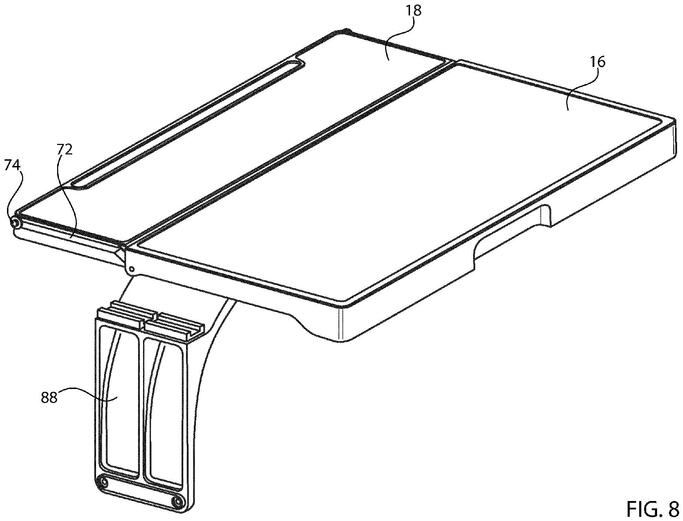

Cooperation between the upper leaf and lower leaf may also be guided by a roller system. In one example, the roller system includes one or more rollers 70 on the upper leaf 16, as illustrated by FIGS. 5A and 5B. The lower leaf may have a corresponding roller track 72, as illustrated by FIG. 8. It should be understood that these features may have their locations reversed, such that the rollers are positioned on the lower leaf and the roller track is positioned on the upper leaf. In one example, it is possible to provide a stop 74 at the location at which the movement of the upper leaf 16 is to be halted.

When the upper leaf 16 is pushed in the direction of arrow 82, movement of rollers 70 with respect to roller track 72 helps guide movement of the upper leaf. When the upper leaf 16 begins moving horizontally with respect to the lower leaf 18, the rollers 70 slide up the roller track 72, which also causes the connection members 22 to move between their horizontal (deployed) position into a more vertical (stowage) position. This raises the upper leaf 16 so that it is in a more vertical stacking configuration with respect to the lower leaf 18. The reverse occurs when the upper leaf 16 is moved in the direction of arrow 80.

FIG. 8 illustrates the tray table of FIGS. 5-7 in a deployed configuration. FIG. 8 also illustrates a side bracket 88 that may be secured to a sidewall or other stable surface of the aircraft or vehicle. A portion (not shown) of the side bracket 88 will extend underneath the lower leaf 18 for securement. FIG. 6A illustrates a potential securement location 94 the side bracket 88. Although it is generally envisioned that the securement may be a stable rigid securement, it is also possible to provide the lower leaf table to be slidable on a second track with respect to the side bracket 88. In this embodiment, the side bracket 88 is secured to a side or front wall and a slide carriage and track assembly, similar to that described above, may be positioned with respect to the lower leaf 18 and the side bracket 88. This embodiment allows slidable movement of the tray table in two dimensions, forward and back and side to side.

Although the embodiments herein are described with respect to a passenger vehicle tray table 12, it should be understood that the support surfaces described by this disclosure may also relate to improvements for shelves, foot stools, and any other support surface that may benefit from having varying length options and that offer horizontal movement in use. For example, similar leaves and linkage systems may be used to create an extendable footstool, an extendable countertop surface, or any other appropriate extendable surface created by sliding and cooperating leaves.

It should be understood that although two leaves 16, 18 are described in this disclosure, multiple additional leaves may be provided. For example, a third leaf may cooperate with the upper leaf 16 in much the same way that the upper leaf 16 and lower leaf 18 cooperate with one another.

Different arrangements of the components depicted in the drawings or described above, as well as components and steps not shown or described are possible. Similarly, some features and sub-combinations are useful and may be employed without reference to other features and sub-combinations. Embodiments of the disclosure have been described for illustrative and not restrictive purposes, and alternative embodiments will become apparent to readers of this patent. Accordingly, the present disclosure is not limited to the embodiments described above or depicted in the drawings, and various embodiments and modifications may be made without departing from the scope of the claims below. Changes and modifications, additions and deletions may be made to the structures and methods recited above and shown in the drawings without departing from the scope or spirit of the disclosure or the following claims.

## Claims

1. A multi leaf support surface, comprising:
an lower leaf secured to a surface; and
an upper leaf horizontally cooperable with respect to the lower leaf,
wherein in a first position, the upper leaf is vertically stacked upon the lower leaf, and
wherein in a second position, the upper leaf horizontally extends from and aligns with the lower leaf.

2. The support surface of claim 1, further comprising a slide carriage and a linkage assembly.

3. The support surface of claim 2, wherein the slide carriage allows horizontal movement of the upper leaf with respect to the lower leaf.

4. The support surface of claim 2 or 3, wherein the linkage assembly allows the upper leaf to move in a downward motion once extended, such that an upper surface of the upper leaf is planar with an upper surface of the lower leaf

5. The support surface of claim 2, 3 or 4, wherein the linkage assembly comprises a four bar linkage.

6. The support surface of any preceding claim, wherein the lower leaf comprises an angled cooperating face and wherein the upper leaf comprises a corresponding angled cooperating face.

7. The support surface of any preceding claim, wherein the multi leaf support surface comprises a passenger vehicle tray table.

8. The support surface of any preceding claim, wherein the surface comprises a passenger seat back.

9. The support surface of any preceding claim, wherein the surface comprises an aircraft monument or privacy shell.

10. The support surface of any preceding claim, wherein the multi leaf support surface comprises a foot stool or a shelf.

11. The support surface of any preceding claim, wherein the lower leaf is allowed to move or rotate with respect to the surface to which it is secured.

12. The support surface of any preceding claim, further comprising a latch for securing the multi leaf support surface in a stowed position.

13. The support surface of any preceding claim, further comprising a slide carriage secured to the upper leaf, an attachment bracket secured to the lower leaf, and a track configured to be received by the slide carriage and the attachment bracket for sliding cooperation between the upper leaf and the lower leaf.

14. The support surface of claim 13, wherein one of the upper leaf or lower leaf comprises one or more rollers and wherein the other of the upper leaf or lower leaf comprises at least one roller track.

15. The support surface of claim 13 or 14, wherein the upper leaf comprises a track receiving groove and the attachment bracket comprises one or more track blocks, wherein the track cooperates with respect to the track receiving groove and the one or more track blocks.
